# EUROPEAN PATENT APPLICATION

(11) **EP 3 827 956 A1**
(43) Date of publication of application: **02.06.2021**
(21) Application number: 20210194.5
(22) Date of filing: 27.11.2020
(51) Int. Cl.: B29C 44/02, B29C 44/04

(54) **PRINTED MATTER PRODUCING METHOD AND PRINTED MATTER PRODUCING APPARATUS**

(30) Priority: 29.11.2019 JP 2019216473; 30.09.2020 JP 2020166393
(71) Applicant: Ricoh Company, Ltd., Tokyo 143-8555 (JP)
(72) Inventor: FUJIWARA, Yukio, Tokyo, 143-8555 (JP); USUI, Yuuma, Tokyo, 143-8555 (JP)
(74) Representative: Kato, Yumiko

(57) **Abstract**

Provided is a printed matter producing method including a foaming liquid layer forming step of applying a foaming agent-containing composition, which contains: a foaming agent; and a polymerizable compound containing a multifunctional monomer, over a print target, to form a foaming liquid layer, a defoaming agent applying step of applying a defoaming agent containing a polymerizable compound selectively over the foaming liquid layer, a defoaming agent curing step of curing the defoaming agent applied, a foaming step of heating the foaming liquid layer after the defoaming agent curing step to foam the foaming liquid layer, and a curing step of performing curing by electron beam irradiation after the foaming step.

## Description

### BACKGROUND OF THE INVENTION

### Field of the Invention

The present disclosure relates to a printed matter producing method and a printed matter producing apparatus.

### Description of the Related Art

Hitherto, interior materials for buildings such as wallpaper and floorings have been used on interior walls, floors, and ceilings of buildings. Known interior materials for buildings have a print layer having a desired printed image, and as a design property, a boss/recess pattern formed on the print layer by, for example, embossing.

As the method for producing the interior materials for buildings having a boss/recess pattern, proposed are, for example, providing a foamable layer containing a foaming agent as a part of an interior material for buildings and foaming the foamable layer to obtain a boss/recess pattern (for example, see Japanese Unexamined Patent Application Publication No. 2007-308869), and additionally embossing the foamable layer (for example, see Japanese Patent No. 5195999).

Also proposed is a wallpaper produced by inkjet-printing a desired image over a foamable layer and foaming the foamable layer (for example, see Japanese Unexamined Patent Application Publication No. 2017-105162).

The present disclosure has an object to provide a printed matter producing method that can efficiently produce a printed matter having a bossed-recessed shape having a high hardness and an excellent solvent resistance.

### SUMMARY OF THE INVENTION

According to one aspect of the present disclosure, a printed matter producing method includes a foaming liquid layer forming step of applying a foaming agent-containing composition, which contains: a foaming agent; and a polymerizable compound containing a multifunctional monomer, over a print target, to form a foaming liquid layer, a defoaming agent applying step of applying a defoaming agent containing a polymerizable compound selectively over the foaming liquid layer, a defoaming agent curing step of curing the defoaming agent applied, a foaming step of heating the foaming liquid layer after the defoaming agent curing step to foam the foaming liquid layer, and a curing step of performing curing by electron beam irradiation after the foaming step.

The present disclosure can provide a printed matter producing method that can efficiently produce a printed matter having a bossed-recessed shape having a high hardness and an excellent solvent resistance.

### BRIEF DESCRIPTION OF THE DRAWINGS

FIG. 1 is a schematic view illustrating an example of a printed matter producing apparatus of the present disclosure used in a printed matter producing method of the present disclosure;
FIG. 2 is a schematic view illustrating an example of a printed matter producing apparatus of the present disclosure used in a printed matter producing method of the present disclosure in Example 2;
FIG. 3 is a schematic view illustrating an example of a printed matter producing apparatus used in a printed matter producing method in Comparative Example 1; and
FIG. 4 is a schematic view illustrating an example of an electron beam irradiator used in, for example, Examples.

### DESCRIPTION OF THE EMBODIMENTS

### (Printed matter producing method and printed matter producing apparatus)

A printed matter producing method of the present disclosure includes a foaming liquid layer forming step of applying a foaming agent-containing composition, which contains: a foaming agent; and a polymerizable compound containing a multifunctional monomer, over a print target, to form a foaming liquid layer, a defoaming agent applying step of applying a defoaming agent containing a polymerizable compound selectively over the foaming liquid layer, a defoaming agent curing step of curing the defoaming agent applied, a foaming step of heating the foaming liquid layer after the defoaming agent curing step to foam the foaming liquid layer, and a curing step of performing curing by electron beam irradiation after the foaming step, preferably further includes a colorant liquid layer forming step, more preferably further includes a precoat liquid layer forming step, and further includes other steps as needed.

A printed matter producing apparatus of the present disclosure includes a foaming liquid layer forming unit configured to apply a foaming agent-containing composition, which contains: a foaming agent; and a polymerizable compound containing a multifunctional monomer, over a print target, to form a foaming liquid layer; a defoaming agent applying unit configured to apply a defoaming agent containing a polymerizable compound over an arbitrary position of the foaming liquid layer; a defoaming agent curing unit configured to cure the defoaming agent applied; a foaming unit configured to heat the foaming liquid layer for foaming the foaming liquid layer; and a curing unit configured to perform curing by electron beam irradiation after the foaming, preferably further includes a colorant liquid layer forming unit, more preferably further includes a precoat liquid layer forming unit, and further includes other units as needed.

The printed matter producing method of the present disclosure can be suitably performed by the printed matter producing apparatus of the present disclosure. The foaming liquid layer forming step can be performed by the foaming liquid layer forming unit. The defoaming agent applying step can be performed by the defoaming agent applying unit. The foaming step can be performed by the foaming unit. The curing step can be performed by the curing unit. The colorant liquid layer forming step can be performed by the colorant liquid layer forming unit. The precoat liquid layer forming step can be performed by the precoat liquid layer forming unit. The other steps can be performed by the other units.

According to existing techniques for interior materials (printed matters) for buildings having a bossed-recessed shape formed by foaming a foamable layer, there is a problem that hardness and solvent resistance of the bossed-recessed shape portion are insufficient.

According to the present disclosure, a printed matter having a bossed-recessed shape having a high hardness and an excellent solvent resistance can be efficiently produced by a producing method of forming a foamed layer by foaming a foaming liquid layer, which is defoamed with a defoaming agent at a position not desired to be foamed, and then curing the foaming liquid layer by electron beam after the foaming step.

According to an embodiment of the present disclosure, the foaming agent-containing composition is substantially free of a polymerization initiator. According to this embodiment, more kinds of materials than can be hitherto used can be used for the foaming agent-containing composition, and the bossed-recessed shape portion has greater hardness and solvent resistance than can be hitherto obtained.

According to another embodiment of the present disclosure, the content of the multifunctional monomer in the foaming agent-containing composition is 50% by mass or greater relative to the total amount of the polymerizable compound contained in the foaming agent-containing composition.

According to this embodiment, the bossed-recessed shape portion has even greater hardness and solvent resistance because the foaming liquid layer three-dimensionally crosslinks by electron beam irradiation.

### <Foaming liquid layer forming step and foaming liquid layer forming unit>

The foaming liquid layer forming step is a step of applying a foaming agent-containing composition, which contains: a foaming agent; and a polymerizable compound containing a multifunctional monomer, over a print target, to form a foaming liquid layer, and is performed by the foaming liquid layer forming unit. The foaming liquid layer may also be referred to as, for example, "undercoat layer".

The foaming liquid layer means a state of the liquid-state foaming agent-containing composition applied but yet to be cured in the curing step described below. The foaming agent-containing composition has a viscosity of a certain degree although the foaming agent-containing composition is a liquid. Therefore, the foaming agent-containing composition can form a layer state when the foaming agent-containing composition is applied.

The average thickness of the foaming liquid layer is not particularly limited, may be appropriately selected depending on the intended purpose, and is preferably 50 micrometers or greater but 300 micrometers or less.

The shape of the foaming liquid layer is not particularly limited and may be appropriately selected depending on the intended purpose.

### <<Print target>>

The foaming agent-containing composition is applied over a print target.

The print target is not particularly limited and may be appropriately selected depending on the intended purpose. Examples of the print target include a base material per se, and a precoat liquid layer described below.

### <<Base material>>

The base material is not particularly limited and may be appropriately selected depending on the intended purpose. Example of the base material include plastic films, paper impregnated with resins, natural paper, synthetic paper formed of synthetic fiber, sheets formed of, for example, nonwoven fabric, cloth, wood fiberboard, metal plates, glass plates, and ceramic plates. Among these base materials, water-resistant base materials are preferable.

Examples of the plastic film include: polyester films; polypropylene films; polyethylene films; plastic films of nylon, vinylon, and acrylic; and products obtained by pasting these films with each other.

The plastic film is not particularly limited and may be appropriately selected depending on the intended purpose. In terms of strength, it is preferable to uniaxially or biaxially stretch the plastic film.

The nonwoven fabric is not particularly limited and may be appropriately selected depending on the intended purpose. Examples of the nonwoven fabric include nonwoven fabric formed of polyethylene fibers sprinkled in a sheet shape and thermocompression-bonded with each other to form a sheet shape.

Examples of the wood fiberboard include medium-density fiberboards (MDF), high-density fiberboards (HDF), particle boards, plywoods such as veneers, and decorative laminates over which sheets are laminated.

The method for applying the foaming agent-containing composition is not particularly limited and may be appropriately selected depending on the intended purpose. Examples of the method include: coating methods such as knife coating methods, nozzle coating methods, die coating methods, lip coating methods, comma coating methods, gravure coating methods, rotary screen coating methods, reverse roll coating methods, roll coating methods, spin coating methods, kneader coating methods, bar coating methods, blade coating methods, casting methods, dipping methods, and curtain coating methods; and inkjet methods.

The shape of the base material is not particularly limited and may be appropriately selected depending on the intended purpose.

The average thickness of the base material is not particularly limited and may be appropriately selected depending on the intended purpose.

### <<Foaming agent-containing composition>>

The foaming agent-containing composition contains: a foaming agent; and a polymerizable compound containing a multifunctional monomer, and further contains other components as needed.

It is preferable that the foaming agent-containing composition be substantially free of a polymerization initiator described below. "Substantially free" means that the polymerization initiator is not substantially contained. The content of the polymerization initiator is less than 1% by mass.

Use of the foaming agent-containing composition free of a polymerization initiator makes it possible to prevent the foaming liquid layer from being cured entirely in the below-described defoaming agent curing step, which is a step performed before foaming, making it possible to foam a desired portion of the foaming liquid layer. Use of the foaming agent-containing composition free of a polymerization initiator makes it possible to prevent the failure to form a bossed-recessed shape due to the foaming agent-containing composition being cured entirely before the foaming step described below is performed. Because the curing step described below is performed by electron beam irradiation, the foaming liquid layer can cure even if the foaming liquid layer is formed of the foaming agent-containing composition free of a polymerization initiator.

### -Foaming agent-

The foaming agent is not particularly limited and may be appropriately selected depending on the intended purpose so long as the foaming agent is a material that undergoes volume expansion when heated. Examples of the foaming agent include thermally expansible microcapsules and thermally degradable foaming agents. Among these foaming agents, thermally expansible microcapsules are preferable as the foaming agent because thermally expansible microcapsules have a high coefficient of volume expansion and can form uniform, small independent cells.

The thermally expansible microcapsules are particles having a core-shell structure that encapsulates a volume expansible compound with a thermoplastic resin. In response to heating, the thermoplastic resin that constitutes the shell starts to soften, and the vapor pressure of the encapsulated volume expansible compound rises to a pressure enough to deform the particles and elongate the thermoplastic resin constituting the shell to expand the particles. Examples of the volume expansible compound include aliphatic hydrocarbons having a low boiling point.

The average particle diameter of the thermally expansible microcapsules is not particularly limited, may be appropriately selected depending on the intended purpose, and is preferably from 10 micrometers through 50 micrometers.

Commercially available products can be used as the thermally expansible microcapsules. Examples of the commercially available products include ADVANCELL EM SERIES, EML101, EM306, and EM403 available from Sekisui Chemical Co., Ltd. (with an average particle diameter of from 12 micrometers through 35 micrometers), EXPANCELL SERIES, 053-40DU, 920-40DU, and 930-120DU available from Akzo Novel N.V. (sold by Japan Fillite Co., Ltd. in Japan) (with an average particle diameter of from 10 micrometers through 38 micrometers), MATSUMOTO MICROSPHERE F and FN SERIES, F-48D, FN-100MD, and FN-80GSD available from Matsumoto Yushi-Seiyaku Co., Ltd. (with an average particle diameter of from 9 micrometers through 20 micrometers), and KUREHA MICROSPHERE H750, H850, and H1100 available from Kureha Corporation (with an average particle diameter of from 20 micrometers through 45 micrometers). One of these commercially available products may be used alone or two or more of these commercially available products may be used in combination.

Examples of the thermally degradable foaming agents include organic foaming agents and inorganic foaming agents.

Examples of the organic foaming agents include azo-dicarboxylic acid amide (ADCA), azo-bisisobutylnitrile (AIBN), p,p'-oxybisbenzene sulfonyl hydrazide (OBSH), and dinitrosopentamethylenetetramine (DPT). One of these thermally degradable foaming agents may be used alone or two or more of these thermally degradable foaming agents may be used in combination.

Examples of the inorganic foaming agents include bicarbonates such as sodium bicarbonate, carbonates, and combinations of bicarbonates with organic acid salts. One of these inorganic foaming agents may be used alone or two or more of these inorganic foaming agents may be used in combination.

The content of the foaming agent is preferably 1% by mass or greater but 15% by mass or less relative to the total amount of the foaming agent-containing composition.

### <<Polymerizable compound>>

The polymerizable compound contains a multifunctional monomer, and may contain a monofunctional monomer.

The multifunctional monomer is a compound that contains two or more vinyl groups, two or more acryloyl groups, or two or more methacryloyl groups in a molecular structure thereof.

Examples of the multifunctional monomer include ethylene glycol di(meth)acrylate, hydroxypivalic acid neopentyl glycol di(meth)acrylate, polytetramethylene glycol di(meth)acrylate, diethylene glycol di(meth)acrylate, triethylene glycol di(meth)acrylate, tetraethylene glycol di(meth)acrylate, polyethylene glycol dimethacrylate [CH₂=CH-CO-(OC₂H₄)n-OCOCH=CH₂ (n≈9), the same (n≈14), the same (n≈23)], dipropylene glycol di(meth)acrylate, tripropylene glycol di(meth)acrylate, polypropylene glycol dimethacrylate [CH₂=C(CH₃)-CO-(OC₃H₆)ₙ-OCOC(CH₃)=CH₂ (n≈7)], 1,3-butanediol di(meth)acrylate, 1,4-butanediol di(meth)acrylate, 1,6-hexanediol di(meth)acrylate, 1,9-nonanediol di(meth)acrylate, neopentyl glycol di(meth)acrylate, tricyclodecane dimethanol di(meth)acrylate, propylene oxide-modified bisphenol A di(meth)acrylate, polyethylene glycol di(meth)acrylate, dipentaerythritol hexa(meth)acrylate, propylene oxide-modified tetramethylolmethane tetra(meth)acrylate, dipentaerythritol hydroxypenta(meth)acrylate, caprolactone-modified dipentaerythritol hydroxpenta(meth)acrylate, ditrimethylolpropane tetra(meth)acrylate, pentaerythritol tetra(meth)acrylate, trimethylolpropane tri(meth)acrylate, ethylene oxide-modified trimethylolpropane tri(meth)acrylate, propylene oxide-modified trimethylolpropane tri(meth)acrylate, caprolactone-modified trimethylolpropane tri(meth)acrylate, pentaerythritol tri(meth)acrylate, tris(2-hydroxyethyl)isocyanurate tri(meth)acrylate, ethoxylated neopentyl glycol di(meth)acrylate, propylene oxide-modified neopentyl glycol di(meth)acrylate, propylene oxide-modified glyceryl tri(meth)acrylate, polyester di(meth)acrylate, polyester tri(meth)acrylate, polyester tetra(meth)acrylate, polyester penta(meth)acrylate, polyester poly(meth)acrylate, polyurethane di(meth)acrylate, polyurethane tri(meth)acrylate, polyurethane tetra(meth)acrylate, polyurethane penta(meth)acrylate, polyurethane poly(meth)acrylate, triethylene glycol divinyl ether, cyclohexane dimethanol divinyl ether, diethylene glycol divinyl ether, triethylene glycol divinyl ether, and ethoxylated (4) bisphenol di(meth)acrylate. One of these multifunctional monomers may be used alone or two or more of these multifunctional monomers may be used in combination.

The ratio [molecular weight/number of functional groups] of the molecular weight of the multifunctional monomer to the number of functional groups of the multifunctional monomer is preferably 250 or greater, because foamability and robustness (hardness and solvent resistance) can both be satisfied.

The content of the multifunctional monomer in the foaming agent-containing composition is preferably 50% by mass or greater and more preferably 90% by mass or greater relative to the total amount of the polymerizable compound. The content of the multifunctional monomer is preferably 100% by mass or less and more preferably 95% by mass or less relative to the total amount of the polymerizable compound. When the content of the multifunctional monomer is 50% by mass or greater relative to the total amount of the polymerizable compound, there is an advantage that a bossed-recessed shape formed is excellent in hardness and solvent resistance.

The monofunctional monomer contains one vinyl group, one acryloyl group, or one methacryloyl group in a molecular structure thereof.

Examples of the monofunctional monomer include γ-butyrolactone (meth)acrylate, isobornyl (meth)acrylate, formalized trimethylolpropane mono(meth)acrylate, trimethylolpropane (meth)acrylic acid benzoic acid ester, (meth)acryloylmorpholine, 2-hydroxypropyl (meth)acrylamide, N-vinyl caprolactam, N-vinyl pyrrolidone, N-vinyl formamide, cyclohexane dimethanol monovinyl ether, hydroxyethyl vinyl ether, diethylene glycol monovinyl ether, dicyclopentadiene vinyl ether, tricyclodecane vinyl ether, benzyl vinyl ether, ethyloxetane methyl vinyl ether, hydroxybutyl vinyl ether, ethyl vinyl ether, ethoxy (4) nonylphenol (meth)acrylate, benzyl (meth)acrylate, and caprolactone (meth)acrylate. One of these monofunctional monomers may be used alone or two or more of these monofunctional monomers may be used in combination.

Among these monofunctional monomers, isobornyl (meth)acrylate is preferable because isobornyl (meth)acrylate has a high glass transition temperature (Tg) and a good robustness.

The content of the monofunctional monomer is preferably 0% by mass or greater but 10% by mass or less relative to the total amount of the foaming agent-containing composition.

### -Other components-

The other components are not particularly limited and may be appropriately selected depending on the intended purpose. Examples of the other components include a filler, a foaming accelerator, a dispersant, a colorant, an organic solvent, an antiblocking agent, a thickener, an antiseptic, a stabilizer, a deodorant, a fluorescent agent, and an ultraviolet screener.

### --Filler--

Examples of the filler include aluminum hydroxide, magnesium hydroxide, barium hydroxide, calcium carbonate, magnesium carbonate, calcium sulfate, barium sulfate, ferrous hydroxide, basic zinc carbonate, basic lead carbonate, silica sand, clay, talc, silicas, titanium dioxide, and magnesium silicate. One of these fillers may be used alone or two or more of these fillers may be used in combination. Among these fillers, calcium carbonate, magnesium carbonate, aluminum hydroxide, and magnesium hydroxide are preferable.

### --Foaming accelerator--

The foaming accelerator is not particularly limited and may be appropriately selected depending on the intended purpose. Examples of the foaming accelerator include zinc naphthenate, zinc acetate, zinc propionate, zinc 2-ethylpentanoate, zinc 2-ethyl-4-methyl pentanoate, zinc 2-methyl hexanoate, zinc 2-ethyl hexanoate, zinc isooctylate, zinc n-octylate, zinc neodecanoate, zinc isodecanoate, zinc n-decanoate, zinc laurate, zinc myristate, zinc palmitate, zinc stearate, zinc isostearate, zinc 12-hydroxystearate, zinc behenate, zinc oleate, zinc linoleate, zinc linolenate, zinc ricinoleate, zinc benzoate, zinc o, m or p-toluate, zinc p-t-butyl benzoate, zinc salicylate, zinc phthalate, zinc salt of phthalic acid monoalkyl (C4 to C18) ester, zinc dehydroacetate, zinc dibutyl dithiocarbamate, zinc aminocrotonate, zinc salt of 2-mercaptobenzothioazole, zinc pyrithion, and zinc complex of urea or diphenyl urea. One of these foaming accelerators may be used alone or two or more of these foaming accelerators may be used in combination.

### --Thickener--

Examples of the thickener include polycyano acrylate, polylactic acid, polyglycolic acid, polycaprolactone, polyacrylic acid alkyl ester, and polymethacrylic acid alkyl ester.

### -- Antiseptic--

Examples of the antiseptic include substances that have been hitherto used and do not initiate polymerization of monomers, such as potassium sorbate, sodium benzoate, sorbic acid, chlorocresol.

### --Stabilizer--

The stabilizer serves to suppress polymerization of monomers under storage, and examples of the stabilizer include anionic stabilizers and free radical stabilizers. Examples of the anionic stabilizers include metaphosphoric acid, maleic acid, maleic anhydride, alkylsulfonic acid, phosphorus pentoxide, iron chloride (III), antimony oxide, 2,4,6-trinitrophenol, thiol, alkylsulfonyl, alkylsulfone, alkylsulfoxide, alkyl sulfite, sultone, sulfur dioxide, and sulfur trioxide. Examples of the free radical stabilizers include hydroquinone and catechol, or derivatives of hydroquinone and catechol.

### <Viscosity>

The viscosity of the foaming agent-containing composition used in the present disclosure is not particularly limited, may be appropriately adjusted depending on the purposes and devices used, and is preferably 5,000 mPa·s or higher but 200,000 mPa·s or lower at 25 degrees C. When the viscosity is in the range described above, dripping of the foaming agent-containing composition is less likely to occur when forming a foaming liquid layer by applying the foaming agent-containing composition, making it possible to obtain a foaming liquid layer having a desired thickness. Moreover, the foaming liquid layer can have a hardness that enables a defoaming agent described below to be applied at a desired position of the foaming liquid layer when applying the defoaming agent.

The viscosity can be measured with a common rotational viscometer. For example, for measuring viscosities in a range of from 5,000 mPa·s through 66,000 mPa·s, a Brookfield rotational digital viscometer (KT-DV1401 for high-speed rotation, available from Cotec Co., Ltd.) can be used. For measuring viscosities higher than the range described above, a Brookfield rotational digital viscometer (KT-DV1402 for high-speed rotation, available from Cotec Co., Ltd.) can be used.

### <Preparation of foaming agent-containing composition>

The foaming agent-containing composition used in the present disclosure can be prepared by using the components described above. The preparation devices and conditions are not particularly limited.

### <Defoaming agent applying step and defoaming agent applying unit>

The defoaming agent applying step is a step of applying a defoaming agent selectively over the foaming liquid layer described above, and is performed by the defoaming agent applying unit.

Selective application over the foaming liquid layer means selecting a position of the foaming liquid layer to be foamed and a position of the foaming liquid layer not to be foamed, and applying the defoaming agent over the position of the foaming liquid layer not to be foamed.

A predetermined region to which the defoaming agent is applied in the foaming liquid layer (i.e., a position of the foaming liquid layer not desired to be foamed) can be identified based on, for example, data representing a bossed-recessed shape of a printed matter to be produced. In the defoaming agent applying step, for example, the defoaming agent is applied and brought into contact with a portion corresponding to a recessed portion (i.e., a region of the foaming liquid layer not to be foamed) in the data representing the bossed-recessed shape of the printed matter to be produced, to suppress foaming of the foaming liquid layer in the foaming step described below. In this way, an arbitrary bossed-recessed shape can be formed.

The method for applying the defoaming agent over the foaming liquid layer is not particularly limited and may be appropriately selected depending on the intended purpose. An inkjet method is preferable because an inkjet method can flexibly adapt to various foaming patterns (defoaming patterns).

The driving method of a discharging head used in the inkjet method may be a method using a piezoelectric element actuator formed of, for example, PZT, a method of applying thermal energy, a method employing an on-demand head using an electrostatic force-applied actuator, and a method employing a continuous jet-type charge control-type head.

### <<Defoaming agent>>

The defoaming agent preferably contains a polymerizable compound, more preferably further contains a polymerization initiator, and contains other components as needed.

It is preferable that the defoaming agent contain a polymerization initiator, because this makes it possible to cure a desired position before electron beam irradiation described below, and to form a bossed-recessed shape.

### -Polymerizable compound-

As the polymerizable compound, the same polymerizable compounds as usable in the foaming agent-containing composition described above can be used. Among these polymerizable compounds, a multifunctional monomer is preferable.

When the polymerizable compound is a multifunctional monomer, there is an advantage that a design property based on an excellent bossed-recessed shape can be imparted to a printed matter because a multifunctional monomer three-dimensionally crosslinks when energy is applied to the multifunctional monomer and it is possible to control ON or OFF of volume expansion of the foaming agent by applying the multifunctional monomer to a desired position of the foaming liquid layer and applying energy to the multifunctional monomer.

### --Polymerization initiator--

The polymerization initiator produces active species such as a radical or a cation upon application of energy of an active energy ray and initiates polymerization of a polymerizable compound (monomer or oligomer). As the polymerization initiator, it is suitable to use a known radical polymerization initiator, cation polymerization initiator, base producing agent, or a combination thereof. Of these, a radical polymerization initiator is preferable. Moreover, the polymerization initiator preferably accounts for 5 percent by weight to 20 percent by weight of the total content of the defoaming agent to obtain sufficient curing speed.

Specific examples of the radical polymerization initiators include, but are not limited to, aromatic ketones, acylphosphine oxide compounds, aromatic onium chlorides, organic peroxides, thio compounds (thioxanthone compounds, thiophenyl group containing compounds, etc.), hexaaryl biimidazole compounds, ketoxime ester compounds, borate compounds, azinium compounds, metallocene compounds, active ester compounds, compounds having a carbon halogen bond(s), and alkyl amine compounds.

In addition, a polymerization accelerator (sensitizer) is optionally used together with the polymerization initiator.

The polymerization accelerator is not particularly limited and may be appropriately selected depending on the intended purpose. Preferred examples thereof include, but are not limited to, amine compounds such as trimethylamine, methyl dimethanol amine, triethanol amine, p-diethylamino acetophenone, p-dimethyl amino ethylbenzoate, p-dimethyl amino benzoate-2-ethylhexyl, N,N-dimethyl benzylamine and 4,4'-bis(diethylamino)benzophenone.

The content thereof is not particularly limited and may be determined depending on the identity (type) of the polymerization initiator and the content thereof.

### -Other components-

As the other components, the same other components as used in the foaming agent-containing composition described above can be used.

### <Defoaming agent curing step and defoaming agent curing unit>

The defoaming agent curing step is a step of curing the defoaming agent and is performed by the defoaming agent curing unit.

By the defoaming agent curing step, the defoaming agent that is present over the surface of a predetermined position of the foaming liquid layer (i.e., a position of the foaming liquid layer not desired to be foamed) and has permeated the position in the thickness direction is cured. That is, by the defoaming agent curing step, part of the foaming liquid layer is cured, to suppress foaming of the foaming liquid layer. Moreover, by the defoaming agent curing step, part of a precoat liquid layer described below may be cured.

As the defoaming agent curing unit, a unit configured to cure the defoaming agent by ultraviolet irradiation is preferable.

### -Ultraviolet irradiation-

In the case of irradiation with ultraviolet ray, mercury-free is preferred in terms of protection of environment. Therefore, replacement with GaN-based semiconductor ultraviolet light-emitting devices is preferred from industrial and environmental point of view. Furthermore, ultraviolet light-emitting diode (UV-LED) and ultraviolet laser diode (UV-LD) are preferable as an ultraviolet light source. Small sizes, long time working life, high efficiency, and high cost performance make such irradiation sources desirable.

Conditions for ultraviolet irradiation are not particularly limited and may be appropriately selected depending on the intended purpose. It is preferable to use an irradiation device that can irradiate a target with an intensity of 6 W/cm or higher from an irradiation distance of 2 mm.

### <Foaming step and foaming unit>

The foaming step is a step of heating the foaming liquid layer to foam the foaming liquid layer, and is performed by the foaming unit. By the foaming liquid layer being entirely heated, the foaming liquid layer is foamed at other than the position at which the defoaming agent is cured. Because the foaming liquid layer does not cure by ultraviolet irradiation in the defoaming agent curing step, the foaming liquid layer is cured sufficiently in the foaming step.

The foaming unit is a unit configured to foam the foaming liquid layer by heating. Examples of the foaming unit include an infrared heater, a hot air heater, and a heating roller.

The heating temperature is not particularly limited and may be appropriately selected depending on the intended purpose so long as the heating temperature is higher than or equal to the thermal degradation temperature of the foaming agent, and is preferably 100 degrees C or higher but 200 degrees C or lower.

### <Curing step and curing unit>

The curing step is a step of curing the foaming liquid layer by electron beam irradiation after the foaming step, and is performed by the curing unit.

The curing unit is a unit configured to perform electron beam irradiation.

Conditions for curing the foaming liquid layer are not particularly limited and may be appropriately selected depending on the intended purpose.

An accelerating voltage of from 120 keV through 250 keV is preferable, and a dose of from 15 kGy through 50 kGy is preferable. The dose means a value measured at a position of a curing target having the longest distance from the electron beam irradiator.

### <Colorant liquid layer forming step and colorant liquid layer forming unit>

The colorant liquid layer forming step is a step of applying a colorant-containing composition containing a colorant and a polymerizable compound to form a colorant liquid layer, and is performed by the colorant liquid layer forming unit. The colorant liquid layer may be referred to as, for example, "print layer" and "image layer".

It is preferable to perform the colorant liquid layer forming step after the curing step.

It is preferable to apply the colorant-containing composition over a foamed layer, which is a cured product of the foaming liquid layer. However, it is possible to apply the colorant-containing composition over the foaming liquid layer.

The method for applying the colorant-containing composition is not particularly limited and may be appropriately selected depending on the intended purpose. An inkjet method is preferable in terms of productivity and flexible adaptability to a wide variety of products in small lots.

The driving method of a discharging head used in the inkjet method may be a method using a piezoelectric element actuator formed of, for example, PZT, a method of applying thermal energy, a method employing an on-demand head using an electrostatic force-applied actuator, and a method employing a continuous jet-type charge control-type head.

The colorant-containing composition preferably contains a colorant and a polymerizable compound, and contains other components such as a polymerization initiator as needed.

### -Polymerizable compound-

As the polymerizable compound, the same polymerizable compounds as usable in the foaming agent-containing composition described above can be used.

The polymerizable compound in the colorant-containing composition preferably contains a monofunctional monomer and may contain a multifunctional monomer.

### -Colorant-

The colorant-containing composition used in the present disclosure may contain a colorant. The colorant-containing composition does not necessarily contain a colorant but can be clear and colorless. In such a case, the colorant-containing composition is good for an overcoating layer to protect an image.

As the colorant, various pigments and dyes may be used that impart black, white, magenta, cyan, yellow, green, orange, and gloss colors such as gold and silver, depending on the intended purpose of the colorant-containing composition of the present disclosure and requisite properties thereof.

A content of the colorant in the composition is not particularly limited, and may be appropriately determined considering, for example, a desired color density and dispersibility of the colorant in the composition. However, it is preferably from 0.1% by mass to 20% by mass relative to the total mass of the colorant-containing composition.

The pigment can be either inorganic or organic, and two or more of the pigments can be used in combination.

Specific examples of the inorganic pigments include, but are not limited to, carbon blacks (C.I. Pigment Black 7) such as furnace black, lamp black, acetylene black, and channel black, iron oxides, and titanium oxides.

Specific examples of the organic pigments include, but are not limited to, azo pigments such as insoluble azo pigments, condensed azo pigments, azo lakes, and chelate azo pigments, polycyclic pigments such as phthalocyanine pigments, perylene pigments, perinone pigments, anthraquinone pigments, quinacridone pigments, dioxane pigments, thioindigo pigments, isoindolinone pigments, and quinofuranone pigments, dye chelates (e.g., basic dye chelates, acid dye chelates), dye lakes (e.g., basic dye lakes, acid dye lakes), nitro pigments, nitroso pigments, aniline black, and daylight fluorescent pigments.

In addition, a dispersant is optionally added to enhance the dispersibility of pigment.

The dispersant has no particular limit and can be, for example, polymer dispersants conventionally used to prepare pigment dispersion (material).

The dyes include, for example, acidic dyes, direct dyes, reactive dyes, basic dyes, and combinations thereof.

### -Other components-

As the other components, the same other components as used in the foaming agent-containing composition described above can be used. As the polymerization initiator, the same polymerization initiator as used in the defoaming agent can be used.

### -Preparation of colorant-containing composition-

The colorant-containing composition used in the present disclosure can be prepared by using the components described above. The preparation devices and conditions are not particularly limited. For example, the colorant-containing composition can be prepared by subjecting a polymerizable monomer, a pigment serving as the colorant, a dispersant, etc., to a dispersion treatment using a dispersing machine such as a ball mill, a kitty mill, a disk mill, a pin mill, and a DYNO-MILL to prepare a pigment liquid dispersion, and further mixing the pigment liquid dispersion with a polymerizable monomer, a polymerization initiator, a polymerization inhibitor, and a surfactant.

### -Viscosity of colorant-containing composition-

The viscosity of the colorant-containing composition used in the present disclosure has no particular limit because it can be adjusted depending on the purpose and application devices. For example, if an ejecting device that ejects the composition from nozzles is employed, the viscosity thereof is preferably in the range of 3 mPa·s to 40 mPa·s, more preferably 5 mPa·s to 15 mPa·s, and particularly preferably 6 mPa·s to 12 mPa·s in the temperature range of 20 degrees C to 65 degrees C, preferably at 25 degrees C. In addition, it is particularly preferable to satisfy this viscosity range by the composition free of an organic solvent. Incidentally, the viscosity can be measured by a cone plate rotary viscometer (VISCOMETER TVE-22L, manufactured by TOKI SANGYO CO.,LTD.) using a cone rotor (1°34' x R24) at a number of rotation of 50 rpm with a setting of the temperature of hemathermal circulating water in the range of 20 degrees C to 65 degrees C. VISCOMATE VM-150III can be used for the temperature adjustment of the circulating water.

### <Precoat liquid layer forming step and precoat liquid layer forming unit>

The precoat liquid layer forming step is a step of applying a precoat layer composition containing a polymerizable compound over the base material to form a precoat liquid layer, and is performed by the precoat liquid layer forming unit.

It is preferable to perform the precoat liquid layer forming step before the foaming liquid layer forming step.

The precoat liquid layer becomes a precoat layer through the curing step. The precoat liquid layer may also be referred to as primer layer.

By forming the precoat liquid layer, it is possible to achieve the effects of improving close adhesiveness of the foaming liquid layer with the base material, and enabling clear expression of the colors of a colorant layer, which is the colorant liquid layer after cured.

The shape of the precoat liquid layer is not particularly limited and may be appropriately selected depending on the intended purpose. The precoat liquid layer may be formed all over the surface of the base material or may be formed over a part of the surface of the base material.

The average thickness of the precoat liquid layer is not particularly limited, may be appropriately selected depending on the intended purpose, and is preferably from 3 micrometers through 50 micrometers.

The method for applying the precoat layer composition is not particularly limited and may be appropriately selected depending on the intended purpose. Examples of the method include: coating methods such as knife coating methods, nozzle coating methods, die coating methods, lip coating methods, comma coating methods, gravure coating methods, rotary screen coating methods, reverse roll coating methods, roll coating methods, spin coating methods, kneader coating methods, bar coating methods, blade coating methods, casting methods, dipping methods, and curtain coating methods; and inkjet methods.

### <<Precoat layer composition>>

The precoat layer composition contains a polymerizable compound and further contains other components as needed.

### -Polymerizable compound-

As the polymerizable compound, the same polymerizable compounds as usable in the foaming agent-containing composition described above can be used.

The polymerizable compound in the precoat layer composition preferably contains an ultraviolet-ray or active-energy-ray-curable monomer, and may contain a thermosetting monomer.

### -Other components-

As the other components, the same other components as used in the foaming agent-containing composition described above can be used.

### -Viscosity of precoat layer composition-

The viscosity of the precoat layer composition used in the present disclosure is not particularly limited, may be appropriately adjusted depending on the purposes and devices used, and is preferably 5 mPa·s or higher but 50,000 mPa·s or lower at 25 degrees C. When the viscosity is in the range described above, dripping of the precoat layer composition is less likely to occur when forming a precoat liquid layer by applying the precoat layer composition, making it possible to obtain a precoat liquid layer having a desired thickness. Moreover, the precoat liquid layer can have a hardness that enables the foaming liquid layer to be applied over the precoat liquid layer.

The viscosity can be measured with a common rotational viscometer described above.

### -Preparation of precoat layer composition-

The precoat layer composition used in the present disclosure can be prepared by using the components described above. The preparation devices and conditions are not particularly limited.

### <Other steps and other units>

The other steps are not particularly limited and may be appropriately selected depending on the intended purpose. Examples of the other steps include an embossing step and a controlling step.

The other units are not particularly limited and may be appropriately selected depending on the intended purpose. Examples of the other units include an embossing unit and a controlling unit.

### <<Embossing step and embossing unit>>

The embossing step is a step of forming a bossed-recessed pattern over a foamed gel layer of a target, and is performed by the embossing unit.

For the bossed-recessed pattern, methods for, for example, embossing, chemical embossing, rotary screening, or raised printing typically used for imparting bosses and recesses to, for example, wallpaper and decorative laminates can be selectively used.

The embossing step may employ a method of imparting bosses and recesses by, for example, processing using an embossing plate, chemical embossing, rotary screening, or raised printing.

Examples of the embossing unit include a unit configured to emboss a printed matter with a cooling roller after heating, and a unit configured to emboss a printed matter simultaneously with heating using heat roller embossing.

The embossing depth of embossing is preferably 0.08 mm or greater but 0.50 mm or less. When the embossing depth is 0.08 mm or greater, a three-dimensional appearance can be expressed. When the embossing depth is 0.50 mm or less, the abrasion resistance of the surface can be improved.

A printed matter producing apparatus of the present disclosure used in the printed matter producing method of the present disclosure will be described in detail with reference to the drawings.

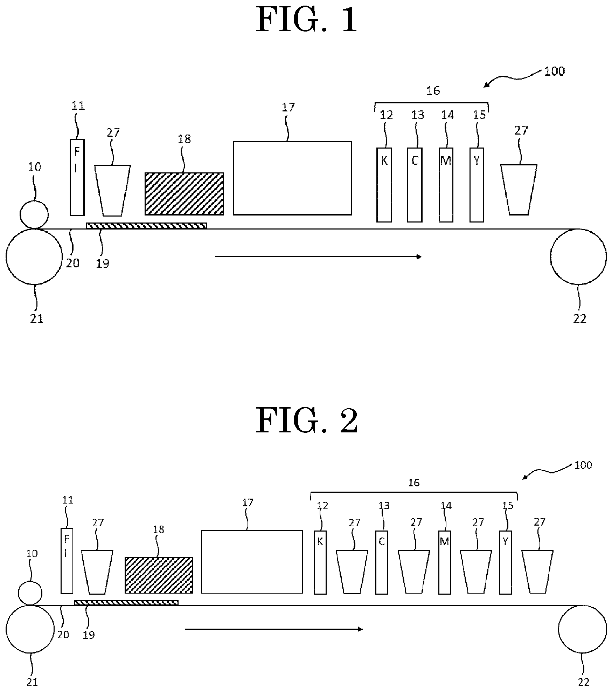

FIG. 1 is a schematic view illustrating an example of a printed matter producing apparatus of the present disclosure. The printed matter producing apparatus 100 of FIG. 1 includes a coating roller 10 configured to apply the foaming agent-containing composition over a base material 19, and at the downstream of the coating roller 10, a discharging head including a defoaming agent head 11, an ultraviolet irradiator 27, a heater 18, an electron beam irradiator 17, and a discharging head 16 including a head 12 for black, a head 13 for cyan, a head 14 for magenta, and a head 15 for yellow. In FIG. 1, the reference numeral 20 denotes a conveyor belt, the reference numeral 21 denotes a sending roller counter to the coating roller 10, and the reference numeral 22 denotes a winding roller.

The winding roller 22 winds up the conveyor belt 20 to convey the base material 19 in the direction of the arrow in FIG. 1.

First, the coating roller 10 applies the foaming agent-containing composition over the surface of the base material, to form a foaming liquid layer.

Next, with the base material, over which the foaming liquid layer is formed, scanned at a predetermined speed, the defoaming agent head 11 discharges the defoaming agent to a position of the foaming liquid layer not desired to be foamed. Next, the ultraviolet irradiator 27 irradiates the defoaming agent with ultraviolet rays to cure the defoaming agent.

Next, the heater 18 heats the foaming liquid layer having the defoaming agent after cured, to foam the foaming liquid layer. The electron beam irradiator 17 irradiates the foaming liquid layer after foamed with electron beams at a predetermined irradiation condition to cure the foaming liquid layer.

Next, the heads for the respective colors, namely the head 12 for black, the head 13 for cyan, the head 14 for magenta, and the head 15 for yellow discharge colorant-containing compositions for black, cyan, magenta, and yellow by an inkjet method, to form a colorant liquid layer. Subsequently, the ultraviolet irradiator 27 irradiates the colorant liquid layer with ultraviolet rays to cure the colorant-containing compositions. In this way, a printed matter is obtained.

A printed matter produced by the printed matter producing method of the present disclosure and the printed matter producing apparatus of the present disclosure has a bossed-recessed shape having a high hardness and an excellent solvent resistance, and is suitable for, for example, interior materials for buildings, such as floorings, wallpaper, interior materials, building materials, wall materials, baseboard materials, and ceiling materials.

### (Print set)

A print set of the present disclosure includes a foaming agent-containing composition, a colorant-containing composition, and a defoaming agent.

As the foaming agent-containing composition and the defoaming agent, the same foaming agent-containing composition and defoaming agent as described above can be used. The colorant-containing composition contains a colorant, and may contain other components as needed. As the colorant and the other components, the same colorant and other components as described above can be used.

Another embodiment of the print set of the present disclosure includes a foaming agent-containing composition, a colorant-containing composition, and a defoaming agent.

As the foaming agent-containing composition and the defoaming agent, the same foaming agent-containing composition and defoaming agent as described above can be used. The colorant-containing composition contains a colorant and a polymerizable compound, and may contain other components as needed. As the colorant, the polymerizable compound, and the other components, the same colorant, polymerizable compound, and other components as described above can be used.

### EXAMPLES

The present disclosure will be further described by way of Examples and Comparative Examples. The present disclosure should not be construed as being limited to these Examples. Unless otherwise explicitly specified, "part" means "part by mass".

### (Preparation example 1)

### <Preparation of defoaming agent>

1,6-Hexanediol diacrylate (obtained from Tomoe Engineering Co., Ltd.) (100 parts by mass) serving as a polymerizable compound, and a photopolymerization initiator (OMNIRAD TPO H, obtained from IGM Resins B.V.) (5 parts by mass) were stirred, to obtain a defoaming agent.

### (Preparation example 2)

### <Preparation of black colorant-containing composition A1>

Acryloylmorpholine (obtained from Tokyo Chemical Industry Co., Ltd.) (60 parts by mass) and benzyl acrylate (obtained from Tokyo Chemical Industry Co., Ltd.) (20 parts by mass) serving as polymerizable compounds, and SPECIAL BLACK 250 (a black pigment, obtained from BASF Japan Ltd.) (40 parts by mass) serving as a colorant were stirred, to prepare a black colorant-containing composition A1.

### (Preparation example 3)

### <Preparation of cyan colorant-containing composition A2>

Acryloylmorpholine (obtained from Tokyo Chemical Industry Co., Ltd.) (60 parts by mass) and benzyl acrylate (obtained from Tokyo Chemical Industry Co., Ltd.) (20 parts by mass) serving as polymerizable compounds, and IRGALITE BLUE GLVO (a cyan pigment, obtained from BASF Japan Ltd.) (40 parts by mass) serving as a colorant were stirred, to prepare a cyan colorant-containing composition A2.

### (Preparation example 4)

### <Preparation of magenta colorant-containing composition A3>

Acryloylmorpholine (obtained from Tokyo Chemical Industry Co., Ltd.) (60 parts by mass) and benzyl acrylate (obtained from Tokyo Chemical Industry Co., Ltd.) (20 parts by mass) serving as polymerizable compounds, and CINQUASIA MAGENTA RT-355-D (a magenta pigment, obtained from BASF Japan Ltd.) (40 parts by mass) serving as a colorant were stirred, to prepare a magenta colorant-containing composition A3.

### (Preparation example 5)

### <Preparation of yellow colorant-containing composition A4>

Acryloylmorpholine (obtained from Tokyo Chemical Industry Co., Ltd.) (60 parts by mass) and benzyl acrylate (obtained from Tokyo Chemical Industry Co., Ltd.) (20 parts by mass) serving as polymerizable compounds, and NOVOPERM YELLOW H2G (a yellow pigment, obtained from Clariant Japan K.K.) (40 parts by mass) serving as a colorant were stirred, to prepare a yellow colorant-containing composition A4.

### (Preparation example 6)

### <Preparation of foaming agent-containing composition A>

Azodicarboxylic acid amide (obtained from Eiwa Chemical Ind. Co., Ltd.) (3% by mass) serving as a foaming agent and zinc naphthenate (obtained from Tokyo Chemical Industry Co., Ltd.) (3% by mass) serving as a foaming accelerator were added and stirred in polymerizable compounds (94% by mass) including isobornyl acrylate (obtained from Tomoe Engineering Co., Ltd.) (90 parts by mass) and trimethylolpropane triacrylate (obtained from Tomoe Engineering Co., Ltd.) (10 parts by mass), to prepare a foaming agent-containing composition A.

### (Preparation example 7)

### <Preparation of defoaming agent A>

Ethoxylated (4) nonylphenol acrylate (obtained from Tomoe Engineering Co., Ltd.) (30 parts by mass) and trimellitic anhydride (obtained from Tokyo Chemical Industry Co., Ltd.) (30 parts by mass) serving as a defoaming agent were stirred, to prepare a defoaming agent A.

### (Preparation example 8)

### <Preparation of precoat layer composition A>

Aliphatic acrylate (CN966J75, obtained from Tomoe Engineering Co., Ltd.) (95 parts), and a photopolymerization initiator (OMNIRAD TPO H, obtained from IGM Resins B.V.) (5 parts) were stirred, to prepare a precoat layer composition A.

### (Production example 1)

### <Preparation of foaming agent-containing composition 1>

MICROSPHERE (H750, with an average particle diameter of 20 micrometers, obtained from Kureha Corporation) (15 parts by mass) serving as a foaming agent was added and stirred in polymerizable compounds including isobornyl acrylate (obtained from Tomoe Engineering Co., Ltd.) (50 parts by mass) serving as a monofunctional monomer and trimethylolpropane triacrylate (obtained from Tomoe Engineering Co., Ltd.) (50 parts by mass) serving as a multifunctional monomer, to obtain a foaming agent-containing composition 1.

The viscosity of the foaming agent-containing composition 1 measured with a Brookfield rotational digital viscometer (KT-DV1401 for high-speed rotation, obtained from Cotec Co., Ltd.) at 25 degrees C was 30 mPa·s.

### (Production example 2)

### <Preparation of foaming agent-containing composition 2>

MICROSPHERE (H750, obtained from Kureha Corporation) (15 parts by mass) serving as a foaming agent was added and stirred in polymerizable compounds including isobornyl acrylate (obtained from Tomoe Engineering Co., Ltd.) (5 parts by mass) and urethane acrylate (CN975, obtained from Sartomer Company, Inc.) (95 parts by mass) serving as a multifunctional monomer, to obtain a foaming agent-containing composition 2.

The viscosity of the foaming agent-containing composition 2 measured in the same manner as described above at 25 degrees C was 9,000 mPa·s at 25 degrees C.

### (Production example 3)

### <Preparation of foaming agent-containing composition 3>

MICROSPHERE (H750, obtained from Kureha Corporation) (15 parts by mass) serving as a foaming agent was added and stirred in polymerizable compounds including isobornyl acrylate (obtained from Tomoe Engineering Co., Ltd.) (10 parts by mass) and urethane acrylate (CN975, obtained from Sartomer Company, Inc.) (90 parts by mass) serving as a multifunctional monomer, to obtain a foaming agent-containing composition 3.

The viscosity of the foaming agent-containing composition 3 measured in the same manner as described above was 5,000 mPa·s at 25 degrees C.

### (Production example 4)

### <Preparation of foaming agent-containing composition 4>

MICROSPHERE (H750, obtained from Kureha Corporation) (10 parts by mass) serving as a foaming agent was added and stirred in a polymerizable compound including urethane acrylate (CN975, obtained from Sartomer Company, Inc.) (100 parts by mass) serving as a multifunctional monomer, to obtain a foaming agent-containing composition 4.

The viscosity of the foaming agent-containing composition 4 measured in the same manner as described above was 180,000 mPa·s at 25 degrees C.

### (Production example 5)

### <Preparation of foaming agent-containing composition 5>

MICROSPHERE (H750, obtained from Kureha Corporation) (10 parts by mass) serving as a foaming agent was added and stirred in polymerizable compounds including isobornyl acrylate (obtained from Tomoe Engineering Co., Ltd.) (5 parts by mass) and urethane acrylate (CN975, obtained from Sartomer Company, Inc.) (95 parts by mass) serving as a multifunctional monomer, to obtain a foaming agent-containing composition 5.

The viscosity of the foaming agent-containing composition 5 measured in the same manner as described above was 150,000 mPa·s at 25 degrees C.

### (Production example 6)

### <Preparation of foaming agent-containing composition 6>

MICROSPHERE (H750, obtained from Kureha Corporation) (10 parts by mass) serving as a foaming agent was added and stirred in polymerizable compounds (94% by mass) including urethane acrylate (obtained from Toagosei Company, Limited, ALLONIX M-1200) (90 parts by mass) serving as a multifunctional monomer and trimethylolpropane triacrylate (obtained from Tomoe Engineering Co., Ltd.) (10 parts by mass), to obtain a foaming agent-containing composition 6. The viscosity of the foaming agent-containing composition 6 measured in the same manner as described above was 250,000 mPa·s at 25 degrees C.

### (Production example 7)

### <Preparation of foaming agent-containing composition 7>

MICROSPHERE (FN-80GSD, with an average particle diameter of 6 micrometers through 10 micrometers, obtained from Matsumoto Yushi-Seiyaku Co., Ltd.) (15 parts) serving as a foaming agent was added and stirred in polymerizable compounds including isobornyl acrylate (obtained from Tomoe Engineering Co., Ltd.) (50 parts by mass) serving as a monofunctional monomer and trimethylolpropane triacrylate (obtained from Tomoe Engineering Co., Ltd.) (50 parts by mass) serving as a multifunctional monomer, to obtain a foaming agent-containing composition 7.

The viscosity of the foaming agent-containing composition 7 measured with a Brookfield rotational digital viscometer (KT-DV1401 for high-speed rotation, obtained from Cotec Co., Ltd.) at 25 degrees C was 40 mPa·s.

### (Example 1)

FIG. 1 is a schematic view illustrating a printed matter producing apparatus of the present disclosure used in Example 1. The printed matter producing apparatus 100 of FIG. 1 includes a coating roller 10 configured to apply the foaming agent-containing composition over a base material 19, and at the downstream of the coating roller 10, a defoaming agent head 11, an ultraviolet irradiator 27, a heater 18, an electron beam irradiator 17, and a discharging head 16 including a head 12 for black, a head 13 for cyan, a head 14 for magenta, and a head 15 for yellow. In FIG. 1, the reference numeral 20 denotes a conveyor belt, the reference numeral 21 denotes a sending roller counter to the coating roller 10, and the reference numeral 22 denotes a winding roller. The winding roller 22 winds up the conveyor belt 20 to convey the base material 19 in the direction of the arrow in FIG. 1.

As the ultraviolet irradiator 27, a LED light source unit (LEDZERO SOLIDCURE, obtained from Integration Technology Ltd.) having a peak wavelength of 385 nm was used.

As the heater 18, a heater produced by combining LATEX BLOWER G SERIES obtained from Hitachi Industrial Equipment Systems Co., Ltd., a high hot air-generating electric heater XS-2 obtained from K.K. Kansai Dennetsu, and a high-blow nozzle 50AL obtained from K.K. Kansai Dennetsu and adjusting a wind speed from the nozzle tip to 30 m/sec was used.

EC300/30/30MA obtained from Iwasaki Electric Co., Ltd. was used as the electron beam irradiator 17 and a compressor-added N₂ gas generator (MAXI-FLOW 30, obtained from Inhouse Gas Co., Ltd.) serving as an inert gas source was coupled in an inert gas blanket at a pressure of 0.2 MPa·s, to flow N₂ at a flow rate of from 2 L/min through 10 L/min and set the oxygen concentration to 500 ppm or lower.

A GEN4 head (MH2420) obtained from Ricoh Printing Systems, Inc. was used as the discharging head 16. Four defoaming agent heads 11, four heads 12 for black, four heads 13 for cyan, four heads 14 for magenta, and four heads 15 for yellow were arranged in parallel. The discharging head 16 was heated to 45 degrees C, and controlled at a frequency at which the discharging head 16 would be able to draw images with a liquid droplet size of 20 pL.

First, the coating roller 10 applied the foaming agent-containing composition 1 with an average thickness of 100 micrometers over the surface of paper having a mass of 80 g/m² (OSTRICHDIA HIGH-GRADE PLAIN PAPER RJPH-03) serving as the base material 19, to form a foaming liquid layer.

Next, with the base material, over which the foaming liquid layer was formed, scanned at a speed of 15 m/min, the defoaming agent heads 11 discharged the defoaming agent to positions of the foaming liquid layer not desired to be foamed. Next, the ultraviolet irradiator 27 cured the defoaming agent.

Next, the heater 18 heated the obtained foaming liquid layer at 170 degrees C for 10 seconds, to foam the foaming liquid layer.

Next the electron beam irradiator 17 performed curing by electron beam irradiation at irradiation conditions of an accelerating voltage of 30 kV and a dose of 30 kGy, to cure the foaming liquid layer.

The electron beam irradiator 17 emitted electron beams 171 in a manner to cover the base material 19, the foaming liquid layer 191, and the defoaming agent 192 entirely.

Next, the heads 12 for black, the heads 13 for cyan, the heads 14 for magenta, and the heads 15 for yellow formed a 25% image (with 1/4 the width of each color film) by an inkjet method using the black, cyan, magenta, and yellow colorant-containing compositions A1 to A4, to form a colorant liquid layer. After the colorant liquid layer was formed, the ultraviolet irradiator 27 cured the colorant liquid layer. In the way described above, a printed matter of Example 1 was obtained.

### (Example 2)

A printed matter was obtained in the same manner as in Example 1, except that unlike in Example 1, the ultraviolet irradiator 27 was disposed next to the defoaming agent head 11 and between the heads 12 to 15 for the respective colors.

### (Example 3)

A printed matter was obtained in the same manner as in Example 1, except that unlike in Example 1, the foaming agent-containing composition 1 was changed to the foaming agent-containing composition 2 having the composition described above.

### (Example 4)

A printed matter was obtained in the same manner as in Example 1, except that unlike in Example 1, the foaming agent-containing composition 1 was changed to the foaming agent-containing composition 3 having the composition described above.

### (Example 5)

A printed matter was obtained in the same manner as in Example 1, except that unlike in Example 1, the foaming agent-containing composition 1 was changed to the foaming agent-containing composition 4 having the composition described above.

### (Example 6)

A printed matter was obtained in the same manner as in Example 1, except that unlike in Example 1, the foaming agent-containing composition 1 was changed to the foaming agent-containing composition 5 having the composition described above.

### (Example 7)

A printed matter was obtained in the same manner as in Example 1, except that unlike in Example 1, the foaming agent-containing composition 1 was changed to the foaming agent-containing composition 6 having the composition described above.

### (Example 8)

A printed matter was obtained in the same manner as in Example 1, except that unlike in Example 1, the foaming agent-containing composition 1 was changed to the foaming agent-containing composition 7 having the composition described above.

### (Example 9)

A printed matter was obtained in the same manner as in Example 1, except that unlike in Example 1, the base material was changed to a steel sheet (an electrogalvanized steel sheet, with a thickness of 5 mm, a width of 225 mm, and a length of 300 mm, obtained from Kyuho Corporation), and a step of applying the precoat layer composition A with a thickness of 30 micrometers over the base material and curing the precoat layer composition A with ultraviolet rays was added.

### (Comparative Example 1)

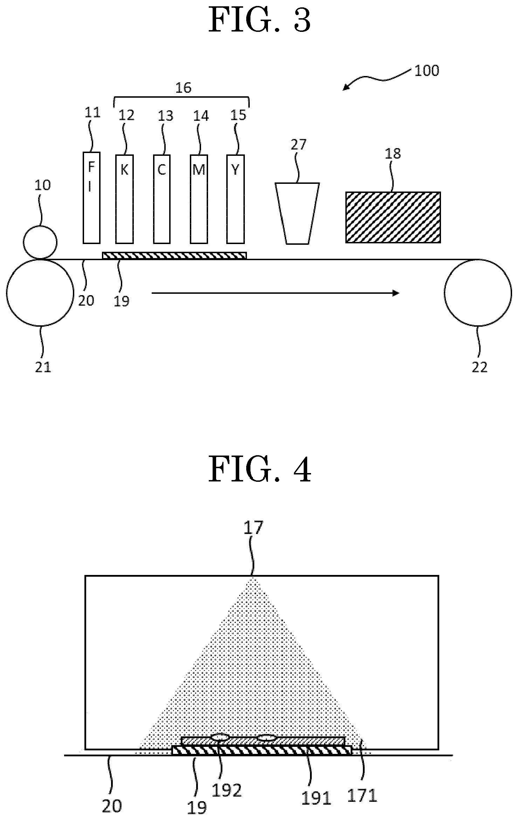

A printed matter was produced with an apparatus illustrated in FIG. 3.

The foaming agent-containing composition A was applied in the same manner as in Example 1 over the surface of paper having a mass of 80 g/m² (OSTRICHDIA HIGH-GRADE PLAIN PAPER RJPH-03) serving as a base material, to form a foaming liquid layer.

Next, with the base material, over which the foaming liquid layer was formed, scanned at a speed of 15 m/min, the defoaming agent head 11 discharged the defoaming agent A to positions of the foaming liquid layer not desired to be foamed. Next, the head 12 for black, the head 13 for cyan, the head 14 for magenta, and the head 15 for yellow formed a 25% image (with 1/4 the width of each color film) by an inkjet method using the black, cyan, magenta, and yellow colorant-containing compositions A1 to A4 having the same compositions as in Example 1, to form a colorant liquid layer.

Next, the ultraviolet irradiator 27 irradiated the foaming liquid layer and the colorant liquid layer with ultraviolet rays, to cure the foaming liquid layer and the colorant liquid layer.

Next, the heater 18 heated the obtained cured products at 170 degrees C for 10 seconds. As a result, heated positions of the foaming liquid layer were foamed (the foaming step was performed). In the way described above, a printed matter of Comparative Example 1 was obtained.

### (Comparative Example 2)

A printed matter of Comparative Example 2 was obtained in the same manner as in Example 1, except that unlike in Example 1, the foaming step was performed after the curing step.

Hardness and solvent resistance of the printed matters of Examples 1 to 9 and Comparative Examples 1 and 2 obtained were evaluated in the manners described below. The evaluation results are presented in Table 1 below.

### <Hardness>

The printed matters of Examples 1 to 9 and Comparative Examples 1 and 2 were tested with a TQC spring-loaded scratch hardness tester (KT-SP0010, obtained from Cotec Inc.) at conditions of a tip diameter of 1 mm and a spring load of 3 N. Hardness was evaluated according to the evaluation criteria described below. Recessing amount was measured with a laser microscope (VKX100, obtained from Keyence Corporation).

### [Evaluation criteria]

A: No dent was generated.
B: A dent of 0 micrometers or greater but less than 50 micrometers was generated.
C: A dent of 50 micrometers or greater was generated.

### <Solvent resistance>

The printed matters of Examples 1 to 9 and Comparative Examples 1 and 2 were blown with ethanol (with a purity of 99.5%) and left to stand for 12 hours, to evaluate solvent resistance according to the evaluation criteria described below.

### [Evaluation criteria]

A: Degradation of the color developing density due to the contact with the liquid was not observed, and peeling from the base material was not observed, either.
B: Degradation of the color developing density due to the contact with the liquid was slightly observed, but peeling from the base material was not observed.
C: Degradation of the color developing density due to the contact with the liquid was observed, or peeling from the base material was observed.

### <Bosses/recesses>

The printed matters of Examples 1 to 9 and Comparative Examples 1 and 2 were observed visually, to evaluate bosses and recesses according to the evaluation criteria described below.

### [Evaluation criteria]

A: Clearly defined bosses and recesses were observed.
B: Bosses and recesses were observed, but were not clearly defined bosses and recesses.
C: No bosses and recesses were formed.

**Table 1**

| | Hardness | Solvent resistance | Bosses/recesses |
|---|---|---|---|
| Ex. 1 | B | A | A |
| Ex. 2 | B | A | A |
| Ex. 3 | A | A | A |
| Ex. 4 | A | A | A |
| Ex. 5 | A | A | A |
| Ex. 6 | A | A | A |
| Ex. 7 | A | A | B |
| Ex. 8 | B | A | A |
| Ex. 9 | B | A | A |
| Comp. Ex. 1 | C | C | c |
| Comp. Ex. 2 | - | - | C |

Example 7 failed to obtain a clearly-definite bossed-recessed shape compared with Examples 1 to 6, because the bossed portions of Example 7 were taller compared with Examples 1 to 6. Comparative Examples 1 and 2 failed to obtain a bossed-recessed shape because the foaming liquid layer, which was also cured before heating like the defoaming agent, failed to be foamed. It was impossible to evaluate hardness and solvent resistance of Comparative Example 2, because Comparative Example 2 flatly failed to obtain a bossed-recessed shape.

Aspects of the present disclosure are, for example, as follows.
<1> A printed matter producing method including:
   applying a foaming agent-containing composition, which contains: a foaming agent; and a polymerizable compound containing a multifunctional monomer, over a print target, to form a foaming liquid layer;
   applying a defoaming agent containing a polymerizable compound selectively over the foaming liquid layer;
   curing the defoaming agent applied;
   heating the foaming liquid layer after the curing, to foam the foaming liquid layer; and
   performing curing by electron beam irradiation after the heating.
<2> The printed matter producing method according to <1>, further including
   applying a colorant-containing composition containing a colorant and a polymerizable compound, to form a colorant liquid layer.
<3> The printed matter producing method according to <1> or <2>, further including
   applying a precoat layer composition containing a polymerizable compound over a base material, to form a precoat liquid layer.
<4> The printed matter producing method according to any one of <1> to <3>,
   wherein in the curing, the defoaming agent is cured by ultraviolet irradiation.
<5> The printed matter producing method according to any one of <1> to <4>,
   wherein the foaming agent-containing composition is substantially free of a polymerization initiator.
<6> The printed matter producing method according to any one of <1> to <5>,
   wherein a content of the multifunctional monomer in the foaming agent-containing composition is 50% by mass or greater relative to a total amount of the polymerizable compound.
<7> The printed matter producing method according to any one of <1> to <6>,
   wherein the defoaming agent contains a polymerization initiator.
<8> The printed matter producing method according to any one of <1> to <7>,
   wherein the defoaming agent and the colorant-containing composition are applied by an inkjet method.
<9> The printed matter producing method according to any one of <1> to <6>,
   wherein the foaming agent contains a thermally expansible microcapsule.
<10> The printed matter producing method according to any one of <1> to <9>,
   wherein a viscosity of the foaming agent-containing composition at 25 degrees C is 5,000 mPa-s or higher but 200,000 mPa·s or lower.
<11> A printed matter producing apparatus including:
   a foaming liquid layer forming unit configured to apply a foaming agent-containing composition, which contains: a foaming agent; and a polymerizable compound containing a multifunctional monomer, over a print target, to form a foaming liquid layer;
   a defoaming agent applying unit configured to apply a defoaming agent containing a polymerizable compound selectively over an arbitrary position of the foaming liquid layer;
   a defoaming agent curing unit configured to cure the defoaming agent applied;
   a foaming unit configured to heat the foaming liquid layer to foam the foaming liquid layer; and
   a curing unit configured to perform curing by electron beam irradiation after foaming.
<12> The printed matter producing apparatus according to <11>, further including
   a colorant liquid layer forming unit configured to apply a colorant-containing composition containing a colorant and a polymerizable compound, to form a colorant liquid layer.
<13> The printed matter producing apparatus according to <11> or <12>,
   wherein the defoaming agent curing unit is a unit configured to cure the defoaming agent by ultraviolet irradiation.
<14> The printed matter producing apparatus according to any one of <11> to <13>,
   wherein a content of the multifunctional monomer in the foaming agent-containing composition is 50% by mass or greater relative to a total amount of the polymerizable compound.
<15> The printed matter producing apparatus according to any one of <11> to <14>,
   wherein the defoaming agent contains a polymerization initiator.
<16> The printed matter producing apparatus according to any one of <11> to <15>,
   wherein the units configured to apply the defoaming agent and the colorant-containing composition are units configured to apply the defoaming agent and the colorant-containing composition by an inkjet method.
<17> The printed matter producing apparatus according to any one of <11> to <16>,
   wherein a viscosity of the foaming agent-containing composition at 25 degrees C is 5,000 mPa·s or higher but 200,000 mPa·s or lower.
<18> The printed matter producing method according to any one of <11> to <17>,
   wherein the foaming agent contains a thermally expansible microcapsule.
<19> A print set including:
   a foaming agent-containing composition containing: a foaming agent; and a polymerizable compound containing a multifunctional monomer;
   a colorant-containing composition containing a colorant; and
   a defoaming agent containing a polymerizable compound.
<20> A print set including:
   a foaming agent-containing composition containing: a foaming agent; and a polymerizable compound containing a multifunctional monomer;
   a colorant-containing composition containing a colorant and a polymerizable compound; and
   a defoaming agent containing a polymerizable compound.

The printed matter producing method according to any one of <1> to <10>, the printed matter producing apparatus according to any one of <11> to <18>, and the print set according to <19> or <20> can solve the various problems in the related art and achieve the object of the present disclosure.

## Claims

1. A printed matter producing method comprising:
applying a foaming agent-containing composition, which contains: a foaming agent; and a polymerizable compound containing a multifunctional monomer, over a print target, to form a foaming liquid layer;
applying a defoaming agent containing a polymerizable compound selectively over the foaming liquid layer;
curing the defoaming agent applied;
heating the foaming liquid layer after the curing, to foam the foaming liquid layer; and
performing curing by electron beam irradiation after the heating.

2. The printed matter producing method according to claim 1, further comprising
applying a colorant-containing composition containing a colorant and a polymerizable compound, to form a colorant liquid layer.

3. The printed matter producing method according to claim 1 or 2, further comprising
applying a precoat layer composition containing a polymerizable compound over a base material, to form a precoat liquid layer.

4. The printed matter producing method according to any one of claims 1 to 3,
wherein in the curing, the defoaming agent is cured by ultraviolet irradiation.

5. The printed matter producing method according to any one of claims 1 to 4,
wherein the foaming agent-containing composition is substantially free of a polymerization initiator.

6. The printed matter producing method according to any one of claims 1 to 5,
wherein a content of the multifunctional monomer in the foaming agent-containing composition is 50% by mass or greater relative to a total amount of the polymerizable compound.

7. The printed matter producing method according to any one of claims 1 to 6,
wherein the defoaming agent contains a polymerization initiator.

8. The printed matter producing method according to any one of claims 1 to 7,
wherein the defoaming agent and the colorant-containing composition are applied by an inkjet method.

9. The printed matter producing method according to any one of claims 1 to 8,
wherein the foaming agent contains a thermally expansible microcapsule.

10. The printed matter producing method according to any one of claims 1 to 9,
wherein a viscosity of the foaming agent-containing composition at 25 degrees C is 5,000 mPa·s or higher but 200,000 mPa·s or lower.

11. A printed matter producing apparatus comprising:
a foaming liquid layer forming unit configured to apply a foaming agent-containing composition, which contains: a foaming agent; and a polymerizable compound containing a multifunctional monomer, over a print target, to form a foaming liquid layer;
a defoaming agent applying unit configured to apply a defoaming agent containing a polymerizable compound selectively over an arbitrary position of the foaming liquid layer;
a defoaming agent curing unit configured to cure the defoaming agent applied;
a foaming unit configured to heat the foaming liquid layer to foam the foaming liquid layer; and
a curing unit configured to perform curing by electron beam irradiation after foaming.

12. The printed matter producing apparatus according to claim 11, further comprising
a colorant liquid layer forming unit configured to apply a colorant-containing composition containing a colorant and a polymerizable compound, to form a colorant liquid layer.

13. A print set comprising:
a foaming agent-containing composition containing: a foaming agent; and a polymerizable compound containing a multifunctional monomer;
a colorant-containing composition containing a colorant; and
a defoaming agent containing a polymerizable compound.

14. The print set according to claim 13,
wherein the colorant-containing composition further contains a polymerizable compound.
